# EUROPEAN PATENT APPLICATION

(11) **EP 2 561 765 A1**
(43) Date of publication of application: **27.02.2013**
(21) Application number: 10850296.4
(22) Date of filing: 04.05.2010
(51) Int. Cl.: A23D 9/02, C11B 7/00, A23G 1/38

(54) **DRY FRACTIONATION METHOD FOR A TRANSESTERIFIED OIL AND FAT COMPOSITION**

(30) Priority: 03.05.2010 KR 20100041205; 22.04.2010 KR 20100037534
(71) Applicant: CJ CheilJedang Corporation, Jung-gu Seoul 100-749 (KR)
(72) Inventor: KIM, Yun Sik, Seoul 150-834 (KR); KANG, Ji Hyun, Seoul 157-773 (KR); LEE, Yun Jeong, INCHEON 402-201 (KR); KIM, Mi Jung, Seongnam-si Gyeonggi-do 462-836 (KR); LEE, Sang Bum, Seoul 152-773 (KR); PARK, Seung Won, Yongin-si Gyeonggi-do 446-727 (KR)
(74) Representative: Bosch, Matthias
(86) International application number: PCT/KR2010/002846
(87) International publication number: WO 2011/132813

(57) **Abstract**

The present invention relates to a dry fractionation method for a reactant produced by the enzymatic transesterification of vegetable or animal oil and fat with a fatty acid derivative, wherein the method is characterized in that oil and fat having a high melting point are removed through dry fractionation when triglycerides and fatty acid derivatives are included in the reactant. The dry fractionation method according to the present invention performs dry fractionation without requiring a pretreatment process of separating a fatty acid derivative, which is used as the raw material for a transesterification reactant, from said reactant. Therefore, the fatty acid derivatives that remain during the reaction increase the fractionation precision of oil and fat, and serve as a solvent that reduces the viscosity of the oil and fat, thereby significantly improving fractionation yield

## Description

### [Technical Field]

The present invention relates to dry fractionation of a reactant obtained through enzymatic transesterification of vegetable or animal fat and a fatty acid derivative, wherein high-melting point fat is removed from the reactant containing triglyceride and the fatty acid derivative through dry fractionation.

The present invention relates to dry fractionation of a fat composition in a state that a transesterified reactant contains a fatty acid derivative used as a raw material. Fractionation of the fat composition containing a fatty acid derivative may have high separation efficiency as in solvent fractionation, provide crystals having excellent filterability, and allow crystallization within a short period of time under better conditions due to reduction in viscosity of a crystallizing solution, thereby decreasing process time. In addition, a desired substance such as triglyceride may be selectively obtained by crystallization, thereby advantageously increasing yield.

### [Background Art]

Fat fractionation is a method of separating a solid phase and a liquid phase through selective crystallization based on difference in crystallization properties of triglyceride and a fatty acid mixture having different melting points.

In general, fractionation is carried out according to the following process. First, fat is prepared in a liquid or molten phase and cooled to a desired separation temperature to induce nuclei generation. Next, crystals are grown to a size and shape enabling efficient separation. Finally, the solid phase and liquid phase are separated by a method such as filtration, filter pressing or centrifugation.

A general fractionation method includes dry fractionation and solvent fractionation. In the fractionation process, effective separation between a solid phase and a liquid phase is the most important factor. In solvent fractionation, separation efficiency can be improved by increasing difference in melting point between triglyceride and fatty acid using an organic solvent such as alcohol, hexane or acetone. However, solvent fractionation has disadvantages of high equipment costs and safety risks associated with use of organic solvents due to increased volume during the process.

In dry fractionation, crystallization depending only on the melting point of fat is performed. Accordingly, dry fractionation has advantages in terms of process simplicity, low cost and environmental friendliness, but has disadvantages in terms of low purity of desired fat components and low separation efficiency due to liquid oil present in solid crystals. Recently, attempts have been made to remove as much of a liquid phase fraction as possible from the solid phase through high-pressure filter pressing, but limitations have been encountered.

A variety of methods for efficiently separating a liquid phase and a solid phase through dry fractionation have been suggested. Japanese Patent Publications No. 2003-306691 and No. 2005-060523 disclose mass crystallization of unstable crystals followed by conversion into stable crystals in order to improve separation efficiency, but this process has a limitation of low conversion ratio if the conversion time is not sufficiently provided. Also, Japanese Patent Publication No. 2005-281462 discloses a method of shortening crystallization time and improving efficiency, but this method inconveniently requires removal of seeds from final reactants due to addition of seeds from the outside.

Common fractionation methods including the dry fractionation method mentioned above relate to fractionation of a fat composition containing triglyceride as a main component.

Enzymatic transesterification has been used as a process for obtaining high-quality triglycerides from vegetable or animal fat. In enzymatic transesterification, transesterification of a raw material fat consisting of vegetable or animal fat and a fatty acid derivative is performed using, for example, a 1,3 selective lipase-based enzyme. Enzymatic transesterification reactants include triglycerides, high-melting point fats, unreacted or remaining fatty acid derivatives, and the like.

In order to obtain desired high-purity triglycerides, high-melting point fats contained in the reactant should be removed. For this purpose, in a conventional method, the unreacted or remaining fatty acid derivatives are first removed through distillation and high-melting point fat is then removed through fractionation.

As used herein, the term "high-melting point fat" refers to saturated triglycerides (in which all three fatty acids constituting triglyceride are saturated fatty acids) and is preferably saturated triglyceride having a melting point of 55°C or higher, such as PPP, PPS, PSS or SSS.

That is, in the related art, a fatty acid derivative used as a raw material is removed from enzymatic transesterification reactants, and fractionation is performed through either dry fractionation or solvent fractionation.

However, of such conventional fractionation methods, dry fractionation has a disadvantage of low separation efficiency, and solvent fractionation has good separation efficiency, but has safety problems due to use of organic solvents.

Therefore, there is a need for a novel fractionation method that provides excellent separation efficiency, reduces process time and allows elimination of organic solvents.

### [Disclosure]

### [Technical Problem]

One aspect of the present invention is to provide an improved fractionation method that provides superior separation efficiency to conventional dry fractionation, reduces apparatus cost to achieve separation at low cost as compared with conventional solvent fractionation, and does not have any risk associated with use of organic solvents.

Another aspect of the present invention is to provide a fractionation method for efficiently removing high-melting point fat, in particular, saturated triglyceride, contained in a triglyceride composition after enzymatic transesterification.

### [Technical Solution]

The foregoing aspects of the present invention are achieved by providing a dry fractionation method in which an enzymatic transesterification reactant is subjected to dry fractionation without separating a fatty acid derivative from the enzymatic transesterification reactant. The fractionation method according to the present invention is advantageous in that separation efficiency is improved and high-melting point triglyceride may be effectively removed, as compared with a conventional fractionation method performed in the presence of only triglyceride.

In addition, according to the present invention, fractionation is performed without removing a fatty acid derivative from the enzymatic transesterification reactant, whereby efficient separation of fat, in particular, a high-melting point fat component (saturated triglyceride), can be achieved, thereby securing high quality of a desired fat composition and providing greatly improved yield.

### [Advantageous Effects]

Fractionation according to the present invention is implemented by a simpler process than a process, which includes preparation of a fat composition, removal of a fatty acid derivative and fractionation, exhibits better fractionation efficiency than typical dry fractionation, and is advantageous in terms of equipment cost and safety by elimination of solvent addition, as compared with solvent fractionation wherein fractionation is performed using a solvent to improve fractionation efficiency.

Fractionation according to the present invention may be performed at a higher cooling medium temperature than solvent fractionation, and has advantages of easy processing and shortened process time due to low viscosity, as compared with dry fractionation. Fractionation according to the present invention may provide high yield due to superior crystallization efficiency to general dry fractionation, and permits elimination of a process of adding or recovering solvents, so that hard butter can be prepared at low cost.

As obtained by the method according to the present invention, fat free from a high-melting point fat may be used alone or in combination with other fat and is thus useful as hard butter for chocolate or coating. Since the high-melting point fat component is removed therefrom, the fat according to the present invention has a similar melting point to human body temperature and may thus readily melts in the mouth, thereby being useful as high value-added fat.

### [Description of Drawings]

Fig. 1 shows HPLC analysis results of a mixture of PMF and stearic ethyl ester before enzymatic transesterification;
Fig. 2 shows HPLC analysis results of a triglyceride composition after enzymatic transesterification. It can be seen from Fig. 2 that high-melting point fat is produced over time via enzymatic transesterification; and
Fig. 3 is a DSC curve confirming removal of high-melting point fat through phase change caused by heat, before and after fractionation.

### [Mode for Invention]

Hereinafter, the present invention will be described in detail.

The present invention relates to a dry fractionation method of a reactant obtained through enzymatic transesterification of vegetable or animal fat and a fatty acid derivative, wherein high-melting point fat is removed from the reactant containing triglyceride and the fatty acid derivative through dry fractionation.

In the present invention, the raw material fat may be any vegetable oil such as palm oil, coconut oil, canola oil, soybean oil, corn oil, sunflower oil, cacao butter, illipe butter, Shea butter, Sal butter, and Kokum butter and animal oils, such as beef tallow and pig tallow. Particularly, fat obtained through transesterification of the raw material fat and a fatty acid derivative is used.

In the present invention, examples of vegetable fat include fat containing palm oil-based vegetable fat or a fraction thereof, fat containing a high oleic sunflower oil, shea fat or a fraction thereof, or fat containing sal fat (sal, Sherea robusta) or a fraction thereof, which contains 40 to 85% by weight (wt%) of POP, without being limited thereto. Preferably, the vegetable fat is fat containing palm oil or a fraction thereof containing 40 to 85 wt% of POP or 25 to 50 wt% of POO, exotic fat or a fraction thereof containing 30 to 60 wt% of SOO, or sunflower oil containing 65 to 90 wt% of OOO.

The fatty acid derivative that may be esterified with the raw material fat includes fatty acid methyl ester, fatty acid ethyl ester, fatty acid propyl ester or fatty acid butyl ester that is produced by reacting fatty acid with a lower alcohol having 1 to 5 carbon atoms. The fatty acid includes saturated or unsaturated C₄ to C₂₂ fatty acid, that is derived from animals or plants present in the natural world. In the present invention, examples of the fatty acid or the derivative thereof may include palmitic acid, stearic acid, arachidonic acid, behenic acid, and derivatives thereof, such as palmitic acid ethyl ester, stearic acid ethyl ester, arachidonic acid ethyl ester, and behenic acid ethyl ester, palmitic acid methyl ester, stearic acid methyl ester, arachidonic acid methyl ester, and behenic acid methyl ester. Preferably, stearic acid, stearic acid ethyl ester, and stearic acid methyl ester are used, without being limited thereto. Any fatty acid and any derivatives thereof generally used in the art may be used.

In the present invention, the raw material fat may be obtained by mixing the vegetable fat with the fatty acid and the derivative thereof at a molar ratio of 1:0.5 to 1:10.

In the present invention, enzymatic transesterification may be used to produce symmetric triglyceride including saturated fatty acids in the sn-1,3 positions and unsaturated acid in the sn-2 position and be conducted at 30 to 60°C for 1 to 30 hours using an sn-1,3 specific enzyme.

Examples of the sn-1,3 specific enzyme may include enzymes extracted from Rhizopus delemar, Mucor miehei, Aspergillus miger, Rhizopus arrhizus, Rhizopus niveus, Mucor javanicus, Rhizopus javenicus, Rhizopus oxyzae, Thermomyces lanuginosus, or the like. Preferably, enzymes extracted from Mucor miehei or Thermomyces lanuginosus are used, without being limited thereto. Any enzyme specific to the sn-1 and 3 positions used in the art may be used.

The present invention adopts a method for dry fractionation of an enzymatically transesterified reactant. In this method, the reactant is subjected to dry fractionation in a state that the fatty acid derivative is contained in fat, without any treatment after enzymatic transesterification.

Dry fractionation according to the present invention is based on the assumption that the fatty acid derivative remaining after reaction serves as a solvent that improves fractionation accuracy of fat while decreasing viscosity of the fat, thereby significantly improving yield.

The fractionation process according to the present invention may be carried out at a higher cooling medium temperature than solvent fractionation and has advantages of easy processing and shortened process time due to low viscosity, as compared with dry fractionation. As compared with general dry fractionation, the fractionation process may provide high yield due to excellent crystallization efficiency, permit elimination of a process of adding or recovering solvents, and enables preparation of hard butter at low cost.

In fractionation of the present invention, a fat composition containing a fatty acid derivative is left at 25 to 35°C for 2 to 48 hours until it crystalizes. When crystallization is sufficiently realized, a fraction having a high melting point may be separated from liquid fat through reduction in pressure or through filter pressing. Such fractionation may be performed once or more. In the present invention, fractionation is performed once, thereby obtaining fat in which the high-melting point fat is present in an amount of 2 wt% or less in the liquid fat.

In the present invention, the fractionized fat is distilled at 0.001 to 30 mbar and 100 to 300°C, preferably, 0.001 to 10 mbar and 150 to 250°C to remove the fatty acid derivative. A high content of triglyceride may be obtained through removal of the fatty acid derivative after transesterification and fractionation. In addition, hard butter free from a high-melting point fat composition may be obtained.

Next, the present invention will be described in more detail with reference to the following examples. These examples are provided for illustrative purposes only and are not to be in any way construed as limiting the present invention.

### Example 1:

### 1-1. Enzymatic transesterification

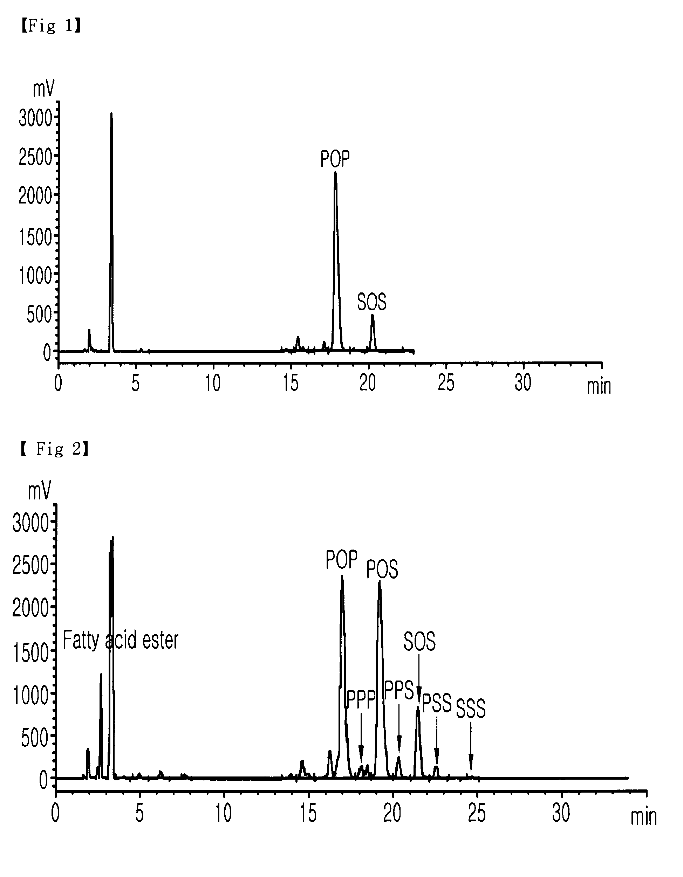

A mixture of palm middle fraction (PMF) and stearic acid ethyl ester (1:1, wt/wt) was passed through a column having a diameter of 5 cm and containing 200 g of Lipozyme TL IM (Novozyme Co., Ltd.) at a flow rate of 0.8 to 1.2 kg/h to perform transesterification. The high-melting point fat composition of the reactant was changed according to flow rate, main components and high-melting point fat content of the obtained transesterification reactant are shown in Table 1 and chromatogram thereof is shown in Fig. 2.

When the ratio (weight ratio, %, w/w) of PMF to stearic acid ethyl ester for enzymatic transesterification ranged from 1:0.1 to 1:3, the composition similar to that of chocolate fat could be effectively obtained.

**TABLE 1**

| TAG composition (%) | Palm middle fraction (PMF) | Reactant-1 | Reactant-2 |
|---|---|---|---|
| POP | 50.4 | 37.3 | 34.6 |
| POS | 9.1 | 33.6 | 37.7 |
| SOS | 0.7 | 9.7 | 11.4 |
| PPP | 1.0 | 2.0 | 1.1 |
| PPS | 0.2 | 3.2 | 2.2 |
| PSS | 0.1 | 1.6 | 1.1 |
| SSS | - | 0.2 | 0.2 |
| High-melting point fat | 1.3 | 7.0 | 4.6 |

| | | | |
|---|---|---|---|
| Content of high-melting point fat (%) = PPP + PPS + PSS + SSS | | | |

### 1-2: Analysis of triglyceride composition

The fats obtained before and after enzymatic transesterification were analyzed as to composition and triglyceride content using high performance liquid chromatography (HPLC). The triglyceride structures of the fats were analyzed using reverse-phase high-performance liquid chromatography and an evaporative light scattering detector (ELSD). 30 µl of sample was dissolved in 10 ml of a solvent (acetonitrile:dichloromethane = 70:30, v/v) and filtered through a PTFE syringe filter (25 mm, 0.2 *µ*m), and then put into a 2 mm vial, and 20 µl of the sample was added thereto. Acetonitrile and dichloromethane were used as solvents A and B, respectively, and flow rate was 0.72 mℓ/min. Solvent gradient elution (A:B, v:v) was performed at 70:30 for 25 minutes and a gradient solvent system was then used. The analysis conditions are listed in the following Table 2.

**TABLE 2**

| | |
|---|---|
| Equipment | Agilent, 1200 HPLC Chemstation |
| Column | Altima HP C 18 HL (3.0 x 150mm) |
| Detector | Alltech, Evaporative Light Scattering Detector (ELSD) |
| Sample amount | 20 µl |
| Solvent | Acetonitrile:dichloromethane Gradient solvent system |
| Detector gain | 1 |
| Detector oven temperature | 45°C |
| Carrier gas | N₂(1.5 L/min) |

HPLC analysis results of triglyceride compositions before and after enzymatic transesterification are shown in Figs. 1 and 2.

### Example 2

10 kg of Reactant-1 obtained through enzymatic transesterification of Example 1 was completely dissolved at 55°C and rapidly cooled to 28°C and crystals were then grown at 28°C for 8 hours, followed by filtering using a filter press (pressure was elevated to 7 bar). The sum of the high-melting point fat composition in the liquid fraction was 1.9 wt% (see Table 5), and a yield of the liquid fraction was 82 wt%. At this time, the sum of high-melting point fat composition in the solid fraction was 30.7 wt%.

### Example 3

Reactant-2 obtained after enzymatic transesterification of Example 1 was subjected to fractionation under the same conditions as in Example 2. The sum of high-melting point fat composition of the liquid fraction obtained herein was 1.9 wt% (see Table 5 below), and a yield of the liquid fraction was 91.2 wt%. Comparing Example 3 with Example 2, difference in yield of the liquid fraction was changed according to the content of the high-melting point fat before fractionation, although fractionation was performed under the same conditions.

### Comparative Example 1

The enzymatic transesterification Reactant-1 obtained in Example 1 was distilled at 0.01 mbar and 230°C, and stearic acid ethyl ester was removed to obtain only 99% of a triglyceride component. Then, as in Example 2, the triglyceride component was completely dissolved at 55°C and rapidly cooled to 28°C and crystals were then grown at 28°C for 8 hours, followed by filtering using a filter press. At this time, the high-melting point fat of the obtained liquid fraction was 2.0 wt% and a yield thereof was 70.5 wt%.

### Comparative Example 2

The enzymatic transesterification Reactant-2 obtained in Example 1 was distilled at 0.01 mbar and 230°C, and stearic acid ethyl ester was removed to obtain only 99% of a triglyceride component. The melting point measured after removal of the ethyl ester was 40°C. Then, as in Example 2, the triglyceride component was completely dissolved at 55°C and rapidly cooled to 28°C and crystals were then grown at 28°C for 8 hours, followed by filtering using a filter press. At this time, the high-melting point fat of the obtained liquid fraction was 1.9 wt% and a yield thereof was 81.8 wt%.

### Example 4

### Analysis of physical properties using DSC

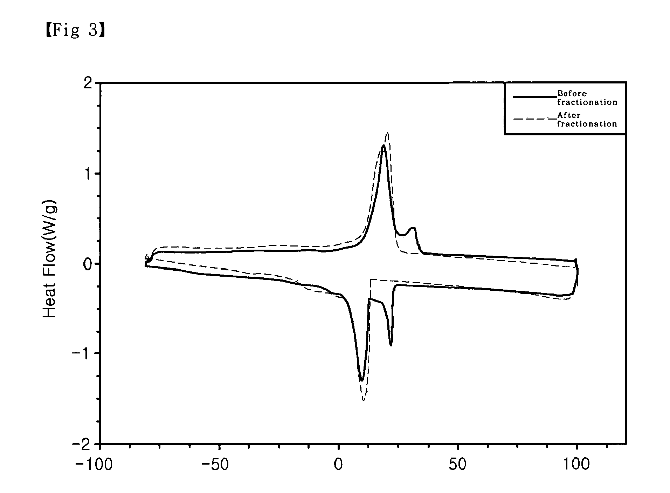

Melting profiles before and after fractionation were measured using a differential scanning calorimeter (DSC) and removal of the high-melting point fat fraction was confirmed through the melting profiles. The experimental conditions are shown in Table 3, phase variation was measured within a range of -60 to 80°C and phase variation before and after fractionation in Example 3 is shown in Fig. 3.

**TABLE 3**

| | |
|---|---|
| DSC equipment | TA Q20 |
| Experiment temperature | -60 to 80°C |
| Cooling speed | 10°C /min (to -80°C) |
| Temperature increase speed | 5°C /min (to 100°C) |
| Sample amount | 15±5mg |

### Example 5

### Analysis of melting point

When the fractioned fat was used as fat for chocolate, one parameter for testing the quality of chocolate is meltability in the mouth. The meltability in the mouth relates to melting point, based on the content of high-melting point fat. For this reason, the melting point of triglyceride was measured using an automatic melting point tester EX-871 after fractionation and the fatty acid derivative was removed through molecular distillation. The analysis conditions of melting point measurement using the tester are shown in the following Table 4.

**TABLE 4**

| | |
|---|---|
| Equipment | EX-871 automatic melting point tester |
| Temperature increase speed | 0.5°C/min |
| Number of samples | 8 |
| Pre-treatment conditions | -20°C, 1 hr |
| Detector | Specific photoelectric sensor detection |
| Heater | Specific coil-type heater 400W |
| Stirrer | Variable speed type motor |

As a result of melting point analysis, the method of Example 3 provided a significant increase in liquid fraction yield and better separation efficiency than the conventional method, that is, Comparative Example 1. The results indicate that the method of the present invention, in which fat containing a fatty acid derivative is subjected to fractionation, had improved filterability and selectivity. Details of fat composition, yield and melting point are shown in Table 5.

**TABLE 5**

| TAG composition (%) | Example 2 | Example 3 | Comparative Example 1 | Comparative Example 2 |
|---|---|---|---|---|
| POP | 36.6 | 35.1 | 37.5 | 38.8 |
| POS | 38.4 | 37.1 | 37.1 | 38.5 |
| SOS | 10.5 | 12.3 | 11.3 | 12.3 |
| PPP | 1.0 | 1.0 | 1.0 | 0.9 |
| PPS | 0.8 | 0.8 | 0.7 | 0.7 |
| PSS | 0.1 | 0.1 | 0.3 | 0.2 |
| SSS | - | - | 0.1 | 0.1 |
| High-melting point fat | 1.9 | 1.9 | 2.0 | 1.9 |
| Melting point (°C)^{**} | 31.5 | 31.8 | 31.8 | 32.0 |
| Yield (%) | 82.0 | 91.2 | 71.5 | 81.8 |

As can be seen from the experimental results, advantageously, the method according to the present invention, in which high-melting point fat containing a fatty acid derivative in the enzymatic transesterification reactant was subjected to dry fractionation, had improved crystallization, purity and yield of fat, as compared with a conventional method in which dry fractionation is performed after removal of fatty acid derivatives. Further, hard butter prepared by the method is useful for preparation of chocolate having meltability in the mouth.

## Claims

1. A dry fractionation method of a reactant obtained through enzymatic transesterification of vegetable or animal fat and a fatty acid derivative, comprising: removing high-melting point fat from the reactant containing the fatty acid derivative.

2. The dry fractionation method according to claim 1, wherein the fatty acid derivative comprises fatty acid methyl ester, fatty acid ethyl ester, fatty acid propyl ester, or fatty acid butyl ester.

3. The dry fractionation method according to claim 2, wherein the fatty acid comprises saturated or unsaturated C₄ to C₂₂ animal- or plant-origin fatty acid.

4. The dry fractionation method according to claim 1, wherein a weight ratio of the vegetable or animal fat to the fatty acid derivative ranges from 1:0.1 to 1:3.

5. The dry fractionation method according to any one of claims 1 to 4, wherein a crystallization temperature ranges from 25 to 35°C upon removal of the high-melting point fat.

6. The dry fractionation method according to any one of claims 1 to 4, wherein the high-melting point fat is present in an amount of 2 wt% or less in a liquid fraction separated through dry fractionation.
